# EUROPÄISCHE PATENTANMELDUNG

(11) **EP 2 008 748 A2**
(43) Veröffentlichungstag der Anmeldung: **31.12.2008**
(21) Anmeldenummer: 08011325.1
(22) Anmeldetag: 23.06.2008
(51) Int. Cl.: B23B 31/20

(54) **Spannzangenfutter**

(30) Priorität: 25.06.2007 DE 102007030859
(71) Anmelder: Eugen Fahrion GmbH & Co., 73667 Kaisersbach (DE)
(72) Erfinder: Fahrion, Ulrich, 73667 Kaisersbach (DE)
(74) Vertreter: Dreiss, Uwe

(57) **Zusammenfassung**

Spannzangenfutter (1) zur Aufnahme einer Spannzange (2) mit einem Werkzeug (7) in einer konischen Öffnung (4) und Spannen derselben mittels einer Spannzangenmutter (5), die in ein Gewinde (6) am Spannzangenfutter (1) eingreift. Die konische Öffnung (4) ist in einer Druckhülse (3) vorgesehen, die hydraulisch axial verschiebbar im Spannzangenfutter (1) angeordnet ist.

## Beschreibung

Die Erfindung betrifft ein Spannzangenfutter, das zur Aufnahme einer Spannzange, in die ein Werkzeug eingesetzt ist, eine konische Öffnung aufweist, die in einer Druckhülse vorgesehen ist, die im Spannzangenfutter axial verschiebbar ist, und bei dem die Spannzange in der konischen Öffnung durch eine Spannmutter sowie durch weitere Mittel gespannt wird, wobei die Druckhülse durch die weiteren Mittel in axialer Richtung verschiebbar ist.

Ein derartiges Spannzangenfutter ist aus der DE 39 38 689 A1 bekannt. Bei diesem Spannzangenfutter werden die weiteren Mittel durch zwei einander radial gegenüber liegende Klemmteile gebildet, die durch eine Schraube gegeneinander gezogen werden und dabei über schräge Wirkflächen auf ebenfalls schräge Wirkflächen der Drückhülse wirken und diese dabei in eine Richtung drücken, wodurch ein weiteres Spannen der Spannzange in der konischen Öffnung des Spannzangenfutters bewirkt wird. Dieses Anordnung ist mechanisch sehr aufwändig, da sie aus relativ vielen Teilen besteht, die alle sehr präzise gearbeitet sein müssen. Eine ähnliche Anordnung ist aus der DE 197 29 249 C2 bekannt.

Der Erfindung liegt die Aufgabe zu Grunde, das Spannen einer Spannzange in einem Spannzangenfutter der eingangs genannten Art weiter zu verbessern und zu vereinfachen. Dabei soll auch ein höherer Druck, mit dem die Spannzange gespannt wird, möglich sein.

Ein Ausführungsbeispiel der Erfindung und ihrer vorteilhaften Weiterbildungen wird im Folgenden unter Bezugnahme auf die beigefügten Zeichnungen näher beschrieben.

Es stellen dar:
- Figur 1: einen Schnitt durch das Ausführungsbeispiel, entsprechend einer Ansicht in Richtung der Pfeile I-I in Figur 2;
- Figur 2: eine Ansicht in Richtung der Pfeile II-II in Figur 1;
- Figur 3: eine Ansicht in Richtung der Pfeile III-III in Figur 2.

Das Spannzangenfutter 1 umfasst die Spannzange 2 nicht unmittelbar. Es ist vielmehr im Spannzangenfutter 1 eine in einer Bohrung 1' in axialer Richtung verschiebbare Druckhülse 3 vorgesehen, die eine konische Öffnung 4 aufweist, in die die Spannzange 2 mit Werkzeug 7, z.B. einem Fräser, eingesetzt wird.

Die Spannzange 2 wird in der Druckhülse 3 und diese im Spannzangenfutter 1 dadurch aufgenommen, dass die Spannmutter 5 auf das Außengewinde 6 am Spannzangenfutter 1 aufgeschraubt wird.

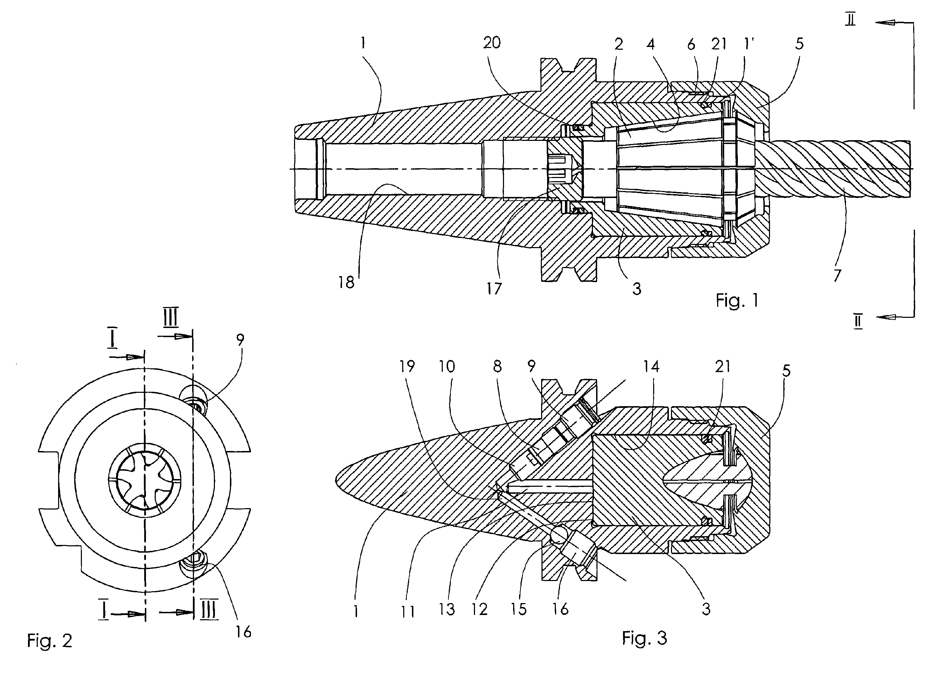

Ein erstes Spannen erfolgt zunächst durch Anziehen der Spannmutter 5. Ein weiteres Spannen erfolgt dadurch, dass die Druckhülse 3 in axialer Richtung verschoben wird. Dies erfolgt hydraulisch dadurch, dass der Kolben 8 durch Anziehen eines Gewindestifts 9, der mit einen InbusSchraubendreher in ein Gewinde in dem Spannzangenfutter 1 eingedreht werden kann, dadurch so verschoben wird, dass im Druckraum 10 Druck auf ein inkompressibles hydraulisches Medium, zum Beispiel Öl, ausgeübt wird. Der Druckraum 10 steht über eine Leitung 11 mit dem durch Dichtungsringe 20 und 21 (jeweils gebildet durch einen O-Ring mit Stützscheibe) abgedichteten Raum in Verbindung, der einerseits zwischen dem Boden 12 der Druckhülse 3 und dem Boden 13 der zugeordneten Ausnehmung 14 im Spannzangenfutter 1 und andererseits zwischen der zylindrischen Außenfläche der Druckhülse 3 und der zylindrischen Innenfläche der Ausnehmung 14 sich gebildet wird, so dass eine Erhöhung des Drucks durch Eindrehen des Gewindestiftes 9 eine Verschiebung der Druckhülse 3 in axialer Richtung, also nach rechts in Figur 3, bewirkt. Dass unter Druck stehende hydraulische Medium in dem genannten Raum zwischen den Dichtungen 20 und 21, insbesondere in dem Spalt zwischen der Außenfläche der Druckhülse 3 und der zylindrischen Innenfläche der Ausnehmung 14 bildet einen Film. Dieser bewirkt eine Dämpfung der Schwingungen des Werkzeugs 7, die bei der Bearbeitung eines Werkstücks entstehen und sich ansonsten auf das Spannzangenfutter übertragen würden.

Der erwähnte Spalt ist in der Zeichnung nicht weiter dargestellt. Er ist in der Realität nur einige Hunderstel Millimeter breit.

Im Hinblick darauf, dass das Volumen zwischen den Dichtungen 20 und 21 sehr klein - praktisch durch die Fertigungstoleranzen vorgegeben - ist., bewirkt schon eine kleine Verringerung des Volumens des Druckraums 10 bei einer Verschiebung des Kolbens 8 einen sehr hohen Druck. So kann man z.B. bei einem Durchmesser des Kolbens 8 von 6 mm einen Druck von 700 bar erreichen.

Zur Entlüftung des Druckraums 10 ist eine Entlüftungsleitung 19 vorgesehen. Es ist ferner ein auf eine Kugel 15 einwirkender Gewindestift 16 vorgesehen, der durch einen Inbusschraubendreher gelöst werden kann, so dass eine Entlüftung nach außen stattfindet.

Mit 17 ist eine Anschlagschraube 17 bezeichnet, die einen Anschlag für das eingesetzte Werkzeug 7 bildet. Sie ist in ein Innengewinde in der Bohrung 18 im Spannzangenfutter 1 eingesetzt.

Es bleibt zum Verständnis darauf hinzuweisen, dass die Abbildung 3 ein Schnitt ist, der nicht durch den Mittelpunkt des Spannzangenfutters geht.

### Bezugszeichenliste

- 1: Spannzangenfutter
- 1': Bohrung in 1
- 2: Spannzange
- 3: Druckhülse
- 4: konische Öffnung
- 5: Spannmutter
- 6: Außengewinde
- 7: Fräser
- 8: Kolben
- 9: Gewindestift
- 10: Druckraum
- 11: Leitung
- 12: Boden von 3
- 13: Boden von 1
- 14: Ausnehmung
- 15: Kugel
- 16: Gewindestift
- 17: Anschlagschraube
- 18: Bohrung
- 19: Entlüftungsöffnung
- 20: Dichtungsring
- 21: Dichtungsring

## Patentansprüche

1. Spannzangenfutter, das zur Aufnahme einer Spannzange (2), in die ein Werkzeug(7) eingesetzt ist, eine konische Öffnung (4) aufweist, die in einer Druckhülse (3) vorgesehen ist, die im Spannzangenfutter (1) axial verschiebbar ist, und bei dem die Spannzange (2)in der konischen Öffnung (4) durch eine Spannmutter (5) sowie durch weitere Mittel gespannt wird, wobei die Druckhülse (3) durch die weiteren Mittel in axialer Richtung verschiebbar ist, **dadurch gekennzeichnet, dass** die weiteren Mittel (8 - 13) durch einen in einem Druckraum (10) angeordneten verschiebbaren Kolben (8) gebildet werden, der bei Verschiebung über ein hydraulisches Medium Druck auf die Druckhülse (3) in Richtung einer weiteren Spannung der Spannzange (2) ausübt.

2. Spannzangenfutter nach Anspruch 1, **dadurch gekennzeichnet, dass** der Druckraum (10)mit einer verschließbaren Entlüftungsöffnung (19) versehen ist.

3. Spannzangenfutter nach Ansprüche 1 oder 2, **dadurch gekennzeichnet, dass** der Druckraum (10) durch eine Leitung (11) mit dem Raum zwischen dem Boden der Druckhülse (13) und dem Boden der die Druckhülse (3)aufnehmenden Ausnehmung (14) im Spannzangenfutter (1 in Verbindung steht.

4. Spannzangenfutter nach einem der Ansprüche 1 bis 3, **dadurch gekennzeichnet, dass** der Raum (10) zwischen der Druckhülse(3) und der Ausnehmung (14) im Spannzangenfutter (1), der mit dem genannten Druckraum (10) in Verbindung steht, durch Dichtungen (20, 21) abgedichtet ist und sich in diesem ein unter Druck stehender schwingungsdämpfender Film des hydraulischen Mediums ausbildet.

5. Spannzangenfutter nach Anspruch 4, **dadurch gekennzeichnet, dass** der Druck ca. 700 bar beträgt.

6. Spannzangenfutter nach Anspruch 1 oder einem der folgenden, **dadurch gekennzeichnet, dass** der Durchmesser des Kolbens ca. 6 mm beträgt.
